## Europäisches Patentamt

## European Patent Office

## Office européen des brevets

(11) Veröffentlichungsnummer: **0 027 147**

**A1**

(12) **EUROPÄISCHE PATENTANMELDUNG**

(21) Anmeldenummer: **79103879.7**

(22) Anmeldetag: **10.10.79**

(51) Int. Cl.³: **F 24 D 11/02**
**F 25 B 27/02**

(43) Veröffentlichungstag der Anmeldung:
**22.04.81** Patentblatt **81/16**

(84) Benannte Vertragsstaaten:
**BE CH DE FR GB IT LU NL SE**

(71) Anmelder: **Jenbacher Werke AG**
**Achenseestrasse**
**A-6200 Jenbach/Tirol(AT)**

(72) Erfinder: **Fezzi, Ekkehard, Dr.mont.Dipl.-Ing.**
**Kienbergstrasse 24**
**A-6200 Jenbach(AT)**

(54) **Wärmesammelanlage.**

㊿ Eine Sammelanlage (1) faßt sämtliche in einem Gebäude anfallenden Abwärmemengen zusammen und führt diese Wärmemengen dem Verdampfer (21) einer Wärmepumpe zu.

Hierzu kann sowohl der Verdampfer (21) in der Wärmesammelanlage angeordnet, als auch die gesamte Wärmepumpe in diesen Wärmesammler (1) untergebracht werden.

Die Wärmesammelanlage ist - im Bezug auf die Abwärmeströme - an zentraler Lage, vorzugsweise knapp unter dem Dach, angeordnet.

In der Wärmesammelanlage werden sämtliche anfallenden Lüftungskanäle und Abgasleitungen zusammengefaßt. Es können auch als Luft-Sonnenkollektoren ausgebildete Dachzwischenräume direkt angeschlossen werden.

FIG. 3

A-6200 Jenbach/Tirol, Achenseestrabe
Österreich

0027147

- 1 -

## Wärmesammelanlage

Gegenstand der Erfindung ist eine Wärmesammelanlage, insbesondere für Wärmepumpenanlagen für die Gebäudebeheizung, bei welcher ein Wärmesammler vorzugsweise im Dachraum angeordnet ist, wodurch die am Gebäude gewinnbare bzw. rückgewinnbare Wärme aus sämtlichen Luft- und Abgasströmen nutzbar gemacht wird.

Die Wirkung von Wärmepumpen setzt eine Niedertemperaturwärme voraus, durch deren Abkühlung eine sonst nicht mehr nutzbare Wärme im Wärmepumpenprozeß verwertet werden kann.

Es ist bekannt, daß Wärmepumpenanlagen einen um so geringeren Leistungsbedarf bzw. um so höheren Ausnutzungsgrad (Leistungsziffer) haben, je geringer die Temperaturdifferenz zwischen jenem Medium ist, dem die Wärme entzogen wird und jenem anderen Medium (Heizmedium), dem die Wärme zugeführt wird. Bei einer Gebäudeheizung beispielsweise ist es daher vorteilhaft, zur relativen Senkung der Temperatur des Heizmediums, mit Fußbodenheizung zu arbeiten, weil diese gegenüber Radiatoren oder Konvektorenheizungen mit einer niedrigeren Vorlauftemperatur das Auslangen finden. Der Kondensator einer Wärmepumpenanlage kann in Fällen einer Fußbodenheizung daher mit relativ geringerer Temperatur und der Kompressor mit niedrigerem Druck arbeiten. Hiedurch wird die Leistungsziffer der Wärmepumpe verbessert mit Hilfe
einer Senkung der Temperatur des Heizmediums.

Zahlreiche Wärmepumpensysteme entnehmen ihre Nutzwärme der
Luft, wenn die im Verdampfer der Wärmepumpe abgekühlt wird.
So ist es bekannt, die den Verdampfer durchströmende Luft
dem Dachbodenraum eines Gebäudes zu entnehmen und somit
die durch die Deckenkonstruktion des Gebäudes in den Dachbodenraum übergehende Verlustwärme nochmals zu nutzen.
Trotzdem wird bei dieser Anordnung mit niedriger Leistungsziffer gearbeitet. Die ebenfalls bekannte Vereisungsgefahr
des Verdampfers erschwert zusätzlich den Wärmepumpenbetrieb. Speziell für elektrische Antriebsmotoren wird der
Leistungsbedarf so groß, daß bei Außentemperaturen um oder
unter Null Grad Celsius die Gebäudeheizung mittels Wärmepumpen seitens mancher Elektrizitätsversorgungsunternehmen
verboten wird.

Andere Wärmepumpenanlagen verwerten die Niedertemperaturwärme von fließendem oder stehendem Gewässer, Grundwasser
oder aber auch Erdreich.

Die Erfindung will nunmehr die in einem zu beheizenden
Gebäude anfallende Abwärme im Sinne eines zyklischen Prozesses in einer Wärmepumpe neuerdings nutzen. Sie bezweckt
dies durch einen Sammelkanal, der im Gebäude so angeordnet
ist, daß die Kanäle für Abluft und Abgase zusammengeführt
werden können. Vorzugsweise ist der Sammelkanal an einer
höchstmöglichen Stelle des Gebäudes angeordnet. Er faßt
möglichst alle Abluft- und Abgasströme zusammen, wodurch
diese ihre Wärme dem Verdampfer der Wärmepumpe übertragen
können. Vorzugsweise kommen die nachstehenden Abluft- und
Abgasströme hiefür in Betracht:

Entlüftungen aus den Innenräumen, im besonderen aus dem Heizraum, der Küche, den Bädern, Dachräumen;

Abstrahlungswärme von Heiz- oder Maschinenräumen;

Abgase von Heizungen, Wärmepumpenantriebsmotoren und ähnlichen Einrichtungen;

Entlüftungen von "Kaltdächern", im Sinne von Luft-Sonnenkollektoren, sowie "Entlüftungen" der Außenfassaden.

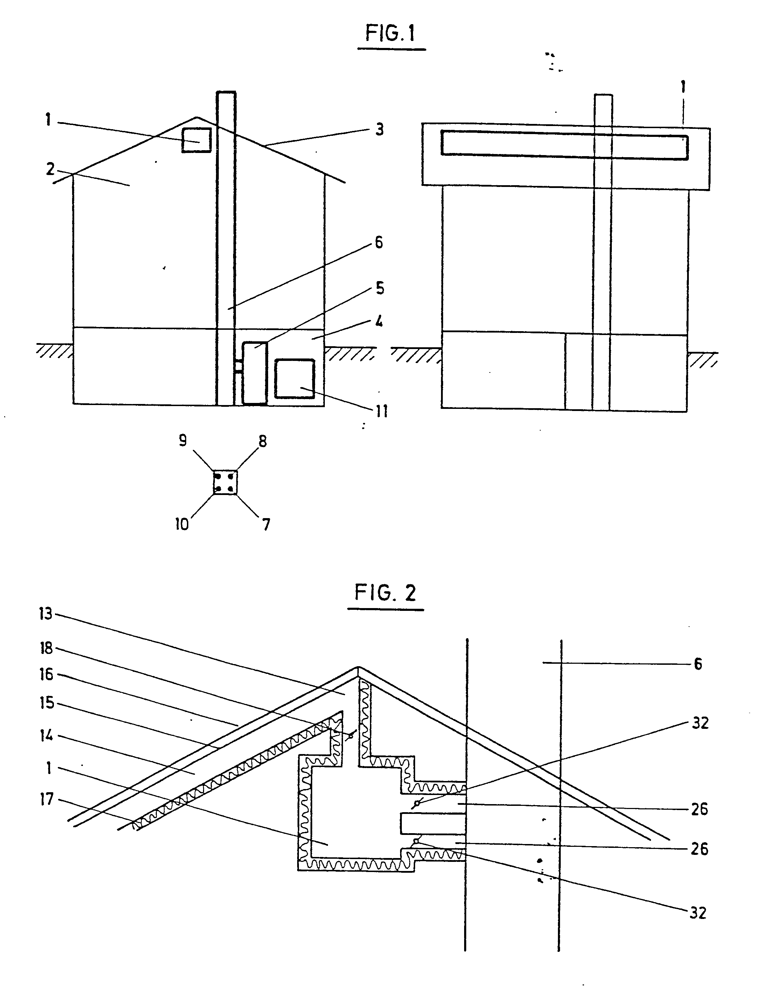

Fig. 1 zeigt eine beispielsweise Anordnung eines Wärmesammlers (1) in einem Gebäude (2) mit Satteldach (3), welches in an sich bekannter Weise als kaltes Dach zweischalig so ausgeführt ist, daß Außenluft zwischen den beiden Dachschalen von unten nach oben oder quer durchströmen kann. Das Gebäude (2) besitzt einen Heizraum (4) mit Heizanlage (5) und einen Kamin (6), welcher außer dem Abgaszug (7) zur Heizanlage (5) auch noch weitere Lüfterzüge enthält, wie (8) für die Heizraumentlüftung (9) für die Küchen- bzw. (10) für die Badentlüftung. Weitere Lüftungszüge für die übrigen Räume sind sinngemäß zu behandeln.

Die Heizanlage kann ersetzt oder aber auch ergänzt werden durch eine Wärmepumpenanlage (11), welche beispielsweise im Keller, hier im Heizraum (4) aufgestellt ist. Diese Gesamtanordnung entspricht einer im Hochbau sehr weitverbreiteten Art und ist nur beispielsweise, keinesfalls einschränkend zu verstehen.

Die im Gebäude (2) anfallenden normalerweise verlorengehenden Wärmemengen werden in einer sehr wirtschaftlichen Art einer Nutzung innerhalb des äußeren Kreislaufes einer Wärmepumpenanlage unter teilweiser Wärmerückgewinnung zugeführt.

<u>Fig. 2</u> zeigt beispielsweise den Wärmesammler (1) im schematischen Schnitt, mit einem viereckigen Querschnitt, unter dem Dachgebälk in beliebiger, zweckentsprechender Form, befestigt. Er ist durch mindestens einen Kanal (13) mit dem Dachzwischenraum (14) so verbunden, daß die durch die Sonneneinstrahlung unter der südseitigen Dachhaut (15) erwärmte Luft im Dachzwischenraum (14) durch den Kanal (13) in den Wärmesammler (1) gelangen kann. Der Dachzwischenraum (14), nach außen begrenzt durch die Dachhaut (15), nach unten durch eine Isolierung (17), wirkt als Sammler für durch Sonneneinstrahlung über die Außentemperatur erwärmte Luft. Sie wird je nach Anfall bzw. Bedarf mittels Öffnen von Absperrelementen (18) in den Wärmesammler strömen, wobei Kaltluft von unten in den dachtraufenseitig offenen Zwischenraum (14) nachströmen kann.

Die Dachhaut (15) in Verbindung mit dem Hohlraum (14) und der Isolierung (17) ist in erfindungsgemäßer Weise als Luft-Sonnenkollektor ausgebildet. Hiezu ist eine lichtdurchlässige Abdeckung (16) vorgesehen, welche den Konvektionsverlust und Rückstrahlungsverlust beschränkt. Die Isolierung (17) an der Rückseite des Hohlraumes (14) verhindert den Wärmeverlust an der Unterseite. Die Dachhaut (15) ist in an sich bekannter Weise durch absorptionsfördernde Methoden zur weitgehenden Umwandlung der auftreffenden Sonnenstrahlung in Wärme ausgestaltet.

Im übrigen gestattet die Ausbildung der sonnenseitigen Dachhaut als Luft-Sonnenkollektor verschiedene Variationen. Zum Beispiel wird die Anbringung einer lichtdurchlässigen Folie großflächig dadurch erleichtert, daß als Dachhaut (15) eine wellige Form, beispielsweise ein Wellblech oder ein Welleternit, benützt wird, auf deren Erhebungen die lichtdurchlässige Folie in einfachster Weise befestigt werden kann. Eine weitere beispielsweise Variation entsteht dadurch, daß die lichtdurchlässige Folie doppelwandig ausgeführt wird.
Damit ist der isolierende Luftraum zwischen den beiden
Wänden der lichtdurchlässigen Folie gegeben und kann der
Zwischenraum (14) zwischen dieser und der Dachhaut (15)
angeordnet werden. Die Isolierung (17) wäre demnach unmittelbar unter der Dachhaut (15) vorzusehen.

Im allgemeinen wird es zweckmäßig sein, die nach Süden
orientierte Dachfläche als Luft-Sonnenkollektor auszubilden. Es wäre aber ohne weiteres denkbar, daß beispielsweise
bei extrem flacher Dachneigung auch die gegenüberliegende
Dachfläche als Luft-Sonnenkollektor ausgebildet wird. In
diesem Sinne kann auch ein Flachdach oder ein sehr flaches
Pultdach analog ausgestattet werden.

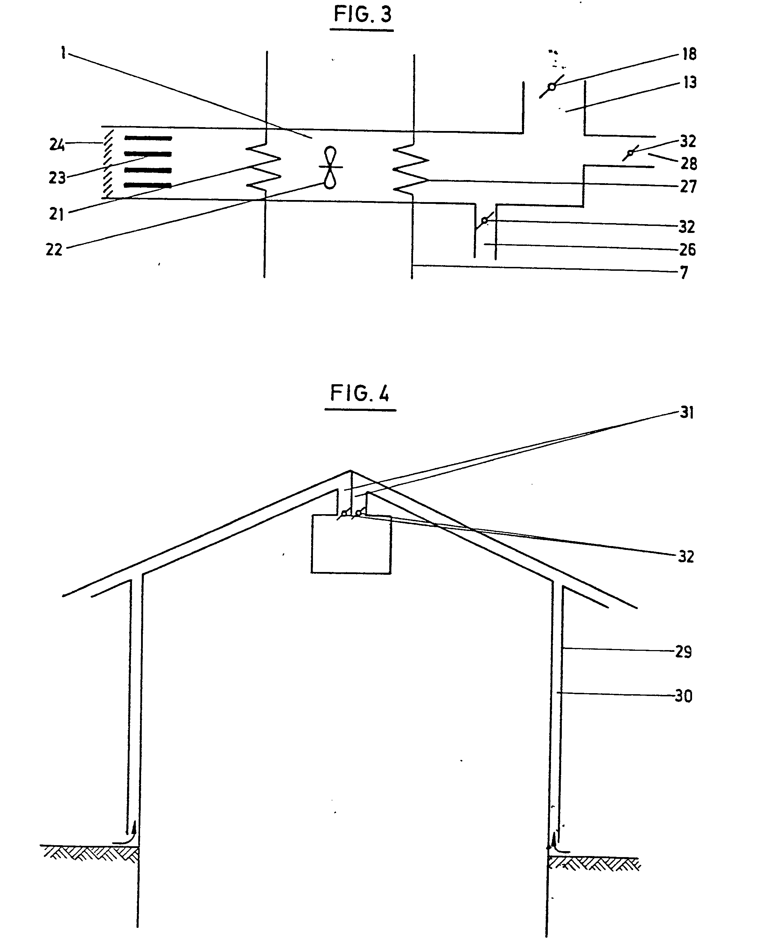

Fig. 3 zeigt den Wärmesammler (1) schematisch im Längsschnitt. Mindestens ein Zuführkanal (13) führt die im Dachzwischenraum (14) erwärmte Luft dem Wärmesammler (1) zu.
In den Wärmesammler (1) wird auch durch Verbindungsstutzen
(26) die Fortluft aus den Entlüftungszügen zugeführt. Verbindungsstutzen (26) sind in der den Lüftungszügen entsprechenden Anzahl vorgesehen. Ein Ventilator (22) und mindestens ein Kältemittelverdampfer (21) sind vorzugsweise
im Wärmesammler (1) untergebracht. Um das Ventilatorgeräusch nach außen zu dämpfen, ist vor dem Ende des Wärmesammlers (1) ein Schalldämpfer (23), beispielsweise ein
Relaxationsschalldämpfer bekannter Art, vorgesehen, der
gegen Witterungseinflüsse durch beispielsweise eine Flatterjalousie (24), geschützt ist.

Eine weitere verwertbare Wärmemenge ist das Abgas der Heizanlage (5) oder der Wärmepumpenanlage (11), besonders falls
diese beispielsweise brennkraftmaschinengetrieben ist.
Die genannten Abgase werden aus dem zugehörigen Abgaszug
(7) über einen Verbindungsstutzen (26) dem Wärmetauscher (27) zugeführt. Um diese Abgase nämlich weitgehend abkühlen zu können, ohne durch die bekannten Korrosionserscheinungen Schäden im Wärmesammler und seinen Einbauteilen zu erhalten, werden die Abgase im Abgaswärmetauscher (27) abgekühlt und mit der dabei frei werdenden Restwärme die über den Ventilator angesaugten Luftmengen weiter erwärmt.

Auch die Abstrahlungswärme der Wärmepumpenanlage (11) wird in vorteilhafter Weise durch die Entlüftung beispielsweise mit dem Entlüftungszug (8) des Heizraumes verwertet.

In einer weiteren Entwicklung des erfindungsgemäßen Wärmesammlers ist es auch vorgesehen, die gesamte Wärmepumpenanlage im Wärmesammler unterzubringen und damit die Abstrahlungswärme auf direktem Wege zu nutzen. Diese Anordnung ist besonders vorteilhaft bei brennkraftmaschinengetriebenen Wärmepumpen wegen der dort erheblichen Strahlungsabwärme. In diesem Falle wird der Wärmesammler gleichzeitig als schallisolierende Umkleidung der Wärmepumpe ausgeführt, wozu dieser auch örtlich erweitert werden kann.

In Fig. 3 ist eine weitere erfindungsgemäße Möglichkeit dargestellt. Durch eine zusätzliche Öffnung (28) strömt Luft aus dem Dachbodenraum in den Wärmesammler (1). Die relativ große Oberfläche der üblichen Dachbodenräume ergibt zwangsläufig eine gewisse Erwärmung der darin befindlichen Luft. Dieser Wärmeinhalt wird im Sammler (1) dem Verdampfer (21) zusätzlich übermittelt.

Schließlich entspricht der weiteren erfindungsgemäßen Nutzung sämtlicher, anfallender Abwärmen eine Anordnung gemäß Fig. 4. Die Wand (29) ist mit einem darunter befindlichen Hohlraum (30) ausgebildet, durch welche die Luft in den Wärmesammler (1) angesaugt wird, über eine Verbindungsleitung (31). Damit wird die Wärmeabstrahlung der Außenwände weitgehend nutzbar gemacht. Dabei ist es gleichgültig, wie die Hohlräume (30) baulich verwirklicht sind. Denkbar ist eine vorgehängte Fassade oder eine entsprechende Ausbildung von
Hohlsteinen in den Wänden, ebenso ist beispielsweise die
Auflage einer Folie mit entsprechenden schmalen Hohlräumen
denkbar.

Zur Regelung ist eine ausreichende Anzahl von Regelorganen
(32) in den entsprechenden Verbindungsleitungen vorgesehen.
Die Betätigung dieser Regelorgane ist sowohl in an sich bekannter Weise als Thermostate, vorzugsweise Wachsthermostate,
vorgesehen, als auch durch Servosteuerung mit einem zentralen Steuergerät.

Auch in Fig. 2 und Fig. 3 sind derartige Regelorgane (32)
dargestellt. Alle diese Regelorgane können zu einem zentralen Steuergerät zusammengefaßt werden, das in an sich bekannter Weise beispielsweise durch einen Microprozessor in
seinem Regelverhalten allen wärmetechnischen Erfordernissen
entsprechen kann.

In diesen einheitlichen Regelkreis kann selbstverständlich
auch das Absperrelement (18) gemäß Fig. 2 mit einbezogen
werden.

Die Anordnung nach Fig. 2 und Fig. 4 ist jeweils nach den
gegebenen Verhältnissen aufeinander abzustimmen. Soferne
beispielsweise gemäß Fig. 2 die sonnenseitige Dachfläche
als Kollektor besonders ausgebildet wird, kann beispielsweise die Zuluft zu diesem aus dem Hohlraum der anliegenden Wand entnommen werden.

Ein weiteres Ziel ist erfindungsgemäß die Ausbildung vorstehend beschriebener Teile des Wärmesammlers als Baukastenteile, in einer gewissen Baugrößenstaffelung in Abhängigkeit vom umbauten, zu beheizenden Raum, fabriksmäßig hergestellt. Damit sollen die Baukastenteile oder Elemente mit minimalem Arbeitsaufwand an Ort und Stelle montiert und installiert werden.

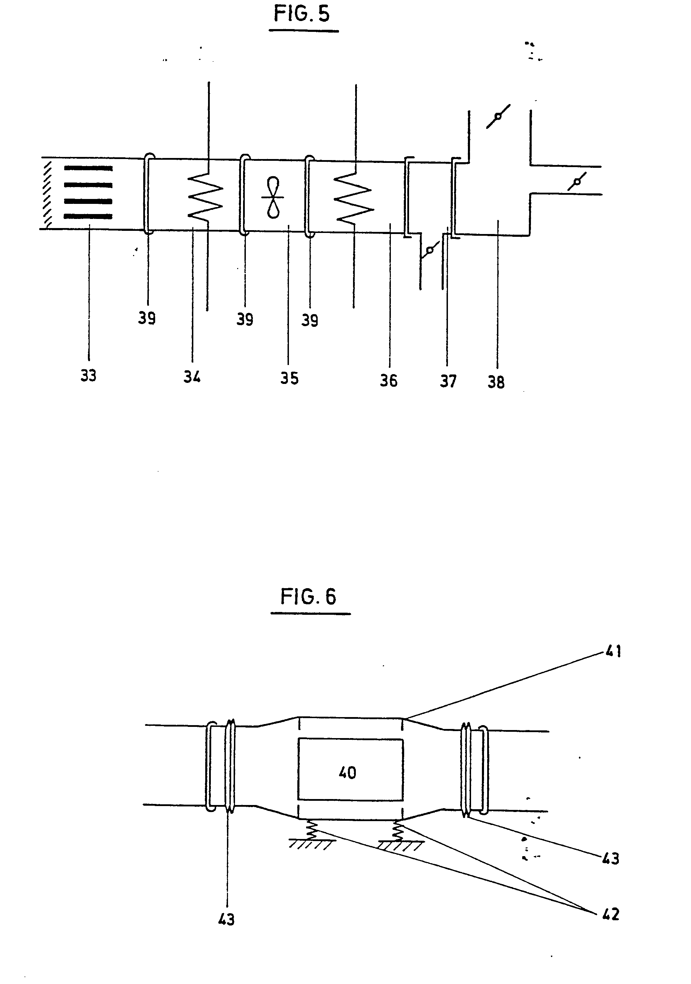

Für die fabriksmäßige Fertigung und eine erleichtere Montage sieht die Erfindung vor, den Wärmesammler zu unterteilen. In Fig. 5 ist eine mögliche Unterteilung des Wärmesammlers unter Wahrung des prinzipiellen Aufbaues gemäß Fig. 3, beispielsweise dargestellt. Das Austrittselement (33) nimmt die Jalousie und den Austrittsschalldämpfer auf. Das Verdampferelement (34) umschließt den Kältemittelverdampfer. Im Ventilatorelement (35) ist der Ventilator untergebracht. Das Wärmetauscherelement (36) enthält den Abgaswärmetauscher. Am Verbindungsstutzenelement (37) ist beispielsweise ein Verbindungsstutzen mit Regelorgan angebracht, es könnten natürlich auch mehrere Verbindungsstutzen und Regelorgane sein. Ganz ähnlich kann das Abschlußelement (38) einen oder mehrere Verbindungsstutzen enthalten und außerdem den Wärmesammelkanal abschließen. Besonders zu beachten ist die Ausbildung der Dichtstellen, welche in Abhängigkeit von den Temperatur- und Druckverhältnissen mit größerer oder kleinerer Dichtwirkung ausgeführt werden können. Im Saugbereich und im Bereich niedriger Temperatur ist die Abdichtung nur bedingt nötig, insbesondere dann, wenn ohnedies aus dem Dachodenraum angesaugt wird. Hingegen soll die beispielsweise durch den Abgaswärmetauscher in der Temperatur angehobene Luft nicht mehr Leckverluste erleiden oder durch Falschluft abgekühlt werden, weshalb ab diesem Bereich der Ausbildung der Abdichtung eine größere Sorgfalt zu widmen ist. Ebenso soll keine stark abgekühlte Luft aus dem Bereich des Verdampfers in den Dachbodenraum austreten. Somit wird die Abdichtung (39) in diesen Bereichen höherer Dichtheitsanforderung in an sich bekannter Weise, zum Beispiel mit O-Ringen oder Manschetten, ausgeführt. In den anderen Fällen geringerer Dichtheitsanforderung genügen beispielsweise Steckverbindungen.

In Fig. 6 ist die bereits erwähnte erfindungsgemäße Anordnung der Wärmepumpe (40) in einem Element des Wärmesammlers dargestellt. Hiezu ist dieser nach Bedarf örtlich erweitert und sind seine Wände (41) schalldämmend ausgeführt. Das Element ist überdies schwingungsdämpfend gelagert (42) und über Kompensatoren (43) mit den anschließenden Elementen ebenfalls schwingungsdämpfend und körperschallisolierend verbunden. Solche schwingungsdämpfenden Maßnahmen sind überdies nach Bedarf auch bei den übrigen Elementen vorgesehen. Die Elemente enthalten außerdem in an sich bekannter Weise Klappen, um zu den Wartungspunkten herankommen zu können.

Die Wärmeisolation der einzelnen Elemente kann je nach dem erwünschten oder unerwünschten Wärmetausch mit der Umgebung entsprechend ausgeführt werden. Auch darin liegt ein beträchtlicher erfindungsgemäßer Vorteil. So wird zum Beispiel das erste Element, wenn es zur Außenluftansaugung dient, ohne weiteres Wärme aus dem Dachbodenraum übernehmen können und braucht daher nicht isoliert zu sein. Hingegen soll die im Verdampfer abgekühlte Luft keine Wärme mehr aufnehmen, sodaß in diesem Bereich eine Isolierung erforderlich ist. Für jedes einzelne Element ist eine sinngemäße Überlegung anzustellen.

Es entspricht der erfindungsgemäßen Auslegung, den Ventilator (22) zur Entlüftung des gesamten Gebäudes heranzuziehen. Die Ausbildung des Wärmesammlers in Elementen bedingt nun den weiteren erfindungsgemäßen Vorteil, die Größe des Ventilatorelementes auf die teilweise unterschiedlichen Luftwechselbedürfnisse zweckmäßig abzustimmen.

Patentansprüche

1. Wärmesammelanlage für Wärmepumpen zur Gebäudeheizung, dadurch gekennzeichnet, daß ein Wärmesammler (1) vorzugsweise an der höchsten Stelle
des Dachraumes vom Gebäude (2) angeordnet ist,
um sämtliche Luft- und Abgasströme aufzunehmen,
deren Temperatur über der Außentemperatur liegt,
mittels Abluftkanälen (7 bis 10, 13, 26).

2. Wärmesammelanlage nach Anspruch 1, dadurch gekennzeichnet, daß einer dieser Zuluftströme zum
Wärmesammler (1) aus dem vorzugsweise zur Ausnutzung der Sonnenenergie ausgebildeten Dachzwischenraum (14) geführt ist.

3. Wärmesammelanlage nach Anspruch 1, dadurch gekennzeichnet, daß der Wärmesammler (1) über Abluftkanäle (7 bis 10) mit der Heiz- und/oder
Wärmepumpenanlage verbunden ist.

4. Wärmesammelanlage nach Anspruch 1 bis 3, dadurch
gekennzeichnet, daß im Wärmesammler (1) ein
Wärmetauscher (27) angeordnet ist, welcher vorzugsweise aus korrosionsbeständigem Material
besteht und in welchem die Kanäle, die aggresive
Medien führen, direkt eingeleitet sind.

5. Wärmesammelanlage nach Anspruch 1 bis 4, dadurch gekennzeichnet daß, weitere Abluftkanäle (13,26) in den Wärmesammler eingeleitet sind, welche die Abluft aus den Räumen des betreffenden Bauwerkes dem Wärmesammler (1) zuführen, sowie Verbindungsleitungen (31), welche Luft aus dem Hohlraum (30) der Wand (29) entnehmen.

6. Wärmesammelanlage nach den Ansprüchen 1 bis 5, dadurch gekennzeichnet, daß der Wärmesammler (1) mehrteilig ausgeführt ist (Austrittselement 33, Verdampferelement 34, Ventilatorelement 35, Wärmetauscherelement 36, Verbindungsstutzenelement 37, Abschlußelement 38), wobei die Verbindungen mit einheitlichen Abdichtungen (39) ausgebildet sind.

7. Wärmesammelanlage nach Anspruch 1 bis 6, dadurch gekennzeichnet, daß im Wärmesammler(1) ein vorzugsweise saugender Ventilator (22) untergebracht ist und diesem nachgeschaltet ein Kältemittelverdampfer (21) und ein Austrittschalldämpfer (23) und eine Jalousie (24).

8. Wärmesammelanlage nach den Ansprüchen 1 bis 7, dadurch gekennzeichnet, daß im Wärmesammler (1) die Wärmepumpe (11 bzw. 40) angeordnet ist.

9. Wärmesammelanlage nach den Ansprüchen 1 bis 8, dadurch gekennzeichnet, daß der Wärmesammler (1) als schallisolierende Haube ausgebildet ist.

10. Wärmesammelanlage nach den Ansprüchen 1 bis 9 dadurch gekennzeichnet, daß der Dachraum des Gebäudes (2) durch eine Öffnung (28) mit dem Sammler (1) verbunden ist.

11. Wärmesammelanlage nach den Ansprüchen 1 bis 10, dadurch gekennzeichnet, daß die Absperrelemente (18) und Regelorgane (32) in den Leitungen (13) und in den Verbindungsstutzen (26) durch ein Steuergerät beeinflußt werden.

FIG.1

FIG. 2

## FIG. 3

## FIG. 4

FIG. 5

39    39    39

33    34    35    36    37    38

FIG. 6

41

40

43

43    42

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 547 214 (ENERGIETECHNIK) <br> * Seite 9, Absatz 2; Fig. 1, Position 4 * <br> -- | 1,2 |
| | DE - A1 - 2 754 340 (KUEHMICHEL) <br> * Seite 8, Absatz 2; Fig. 1, Position 10, Fig. 1, Position 2 * <br> -- | 1,3,4 |
| | DE - A1 - 2 747 620 (BUDERUS) <br> * Seite 4, Absatz 3; Fig., Fig., Position 3 * <br> -- | 1,3,4 |
| | DE - A1 - 2 836 039 (ZAEGEL-HELD) <br> * Fig. 6, Positionen 10,11,17,18,31 * <br> -- | 1 |
| | DE - A1 - 2 708 029 (MOTORHEIZUNG GMBH) <br> * Fig. 1, Positionen 4, 11, 13, 14 * <br> -- | 7 |
| A | DE - U1 - 7 715 448 (GROSZ) <br> * ganzes Dokument * <br> ---- | 8 |

### KLASSIFIKATION DER ANMELDUNG (Int.Cl.3)

F 24 D 11/02

F 25 B 27/02

### RECHERCHIERTE SACHGEBIETE (Int. Cl.3)

F 24 D 11/00

F 25 B 27/00

F 25 B 29/00

### KATEGORIE DER GENANNTEN DOKUMENTE

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 06-06-1980 | PIEPER |

EPA form 1503.1 06.78